(19) Europäisches Patentamt
European Patent Office
Office européen des brevets

(11) **EP 4 526 972 B1**

(12) **EUROPÄISCHE PATENTSCHRIFT**

(45) Veröffentlichungstag und Bekanntmachung des Hinweises auf die Patenterteilung:
**01.07.2026  Patentblatt 2026/27**

(21) Anmeldenummer: **23725172.3**

(22) Anmeldetag: **04.05.2023**

(51) Internationale Patentklassifikation (IPC):
***H02J 7/54*** *(2026.01)*      ***H01M 10/42*** *(2006.01)*

(52) Gemeinsame Patentklassifikation (CPC):
**H02J 7/54; H01M 10/425;** H01M 2010/4271

(86) Internationale Anmeldenummer:
**PCT/EP2023/061831**

(87) Internationale Veröffentlichungsnummer:
**WO 2023/222404 (23.11.2023 Gazette 2023/47)**

(54) **AUSGLEICHSMODUL FÜR EINE WERKZEUGMASCHINE, WERKZEUGMASCHINE UND LADUNGSAUSGLEICHSVERFAHREN**

COMPENSATION MODULE FOR MACHINE TOOL, MACHINE TOOL AND LOAD BALANCING METHOD

MODULE D'ÉQUILIBRAGE POUR UNE MACHINE-OUTIL, MACHINE-OUTIL ET PROCÉDÉ D'ÉQUILIBRAGE DE CHARGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **18.05.2022  EP 22173946**

(43) Veröffentlichungstag der Anmeldung:
**26.03.2025  Patentblatt 2025/13**

(73) Patentinhaber: **Hilti Aktiengesellschaft**
**9494 Schaan (LI)**

(72) Erfinder: **LACHER, Michael**
**86830 Schwabmünchen (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**DE-A1- 102016 206 919      DE-A1- 102017 222 975**
**US-A1- 2011 115 297      US-A1- 2014 015 475**

## Beschreibung

Die Erfindung betrifft ein Ausgleichsmodul für eine Werkzeugmaschine, wobei die Werkzeugmaschine einen Motor, sowie mindestens eine erste und eine zweite Energieversorgungsvorrichtung umfasst. Die erste Energieversorgungsvorrichtung liegt mit einem ersten Schaltelement und einem dritten Schaltelement des Ausgleichsmoduls verbunden vor und die zweite Energieversorgungsvorrichtung mit einem zweiten Schaltelement und einem vierten Schaltelement des Ausgleichsmoduls, wobei zwischen einem Mittelabgriff der Energieversorgungsvorrichtungen der Werkzeugmaschine und den Schaltelementen des Ausgleichsmoduls eine erste und eine zweite Spule angeordnet vorliegt, wobei die Spulen dazu eingerichtet sind, dass durch die Spulen ein Ausgleichsstrom I_bal fließt. In weiteren Aspekten betrifft die Erfindung eine Werkzeugmaschine mit einem solchen Ausgleichsmodul, sowie ein Verfahren zum Ladungsausgleich zwischen einer ersten und einer zweiten Energieversorgungsvorrichtung einer Werkzeugmaschine, wobei der Ausgleichsstrom I_bal, der durch die Spulen fließt, durch eine geeignete Ansteuerung der Schaltelemente des Ausgleichsmoduls eingestellt werden kann.

## Hintergrund der Erfindung:

Im Stand der Technik sind Werkzeugmaschinen bekannt, mit denen unterschiedliche Arbeiten durchgeführt werden können. Beispielsweise sind Bohrhämmer, Meißelgeräte, Trenn- oder Winkelschleifer, Schraubgeräte oder Kembohrgeräte bekannt, bei denen jeweils ein Werkzeug durch einen Motor angetrieben wird. Eine Energieversorgung kann über einen Netzanschluss oder mit Energieversorgungsvorrichtungen, Batterien oder Akkumulatoren ("Akkus") bereitgestellt werden.

Es sind eine Reihe von Anwendungsfällen solcher Werkzeugmaschinen bekannt, bei denen hohe Leistungen erforderlich sind, um die entsprechenden Arbeiten durchzuführen. Bei Werkzeugmaschinen, deren Energieversorgung von einer Energieversorgungsvorrichtung gebildet wird, kann es vorkommen, dass die für die Arbeit erforderliche Leistung die maximal mögliche Abgabeleistung der Energieversorgungsvorrichtung übersteigt. Um dieser Herausforderung zu begegnen, werden solche Werkzeugmaschinen häufig mit einer Schnittstelle für zwei Energieversorgungsvorrichtungen ausgestattet, um mit zwei Energieversorgungsvorrichtungen, die in Reihe oder parallel geschaltet werden können, die gewünschte Leistung bereitstellen zu können.

Bei der Arbeit mit Werkzeuggeräten mit zwei oder mehr Energieversorgungsvorrichtungen kann aber folgendes Problem auftreten: es kann zu Situationen kommen, in denen der Ladungszustand ("State of Charge", SOC) der Energieversorgungsvorrichtungen nicht gleich ist. Eine ähnliche Situation kann auch dann auftreten, wenn unterschiedliche Typen von Energieversorgungsvorrichtungen verwendet werden, beispielsweise eine Energieversorgungsvorrichtung mit 5 Ampèrestunden (Ah) und eine Energieversorgungsvorrichtung mit 10 Ah. Wenn beispielsweise eine der Energieversorgungsvorrichtungen ganz oder teilweise entladen ist, kann für die Werkzeugmaschine nicht über den gesamten Arbeitszeitraum die volle Leistung erbracht werden. Sobald eine der Energieversorgungsvorrichtungen vollständig entladen ist, kann bei einer Reihenschaltung der Energieversorgungsvorrichtungen keine weitere Leistung aus dieser Energieversorgungsvorrichtung entnommen werden. Die Arbeit mit der Werkzeugmaschine muss dann möglichweise - trotz vorhandener Restladung in der anderen Energieversorgungsvorrichtung - beendet werden.

Insbesondere wird die für die Arbeit mit der Werkzeugmaschine zur Verfügung stehende Energie bzw. Leistung durch die kleinste Ladungsmenge bestimmt, die bei mehreren Energieversorgungsvorrichtungen in einer der Energieversorgungsvorrichtungen enthalten ist. Mit anderen Worten bestimmt die Energieversorgungsvorrichtung mit dem geringsten SOC-Wert die für die Werkzeugmaschine zur Verfügung stehende Leistung und die Reichweite, mit der Arbeiten mit der Werkzeugmaschine durchgeführt werden können.

Im Stand der Technik sind Verfahren bekannt, mit denen ein Ladungsausgleich zwischen elektri-schen Komponenten in einer Werkzeugmaschine ermöglicht werden kann. Beispielsweise offenbart US 5 631 534 A eine Anordnung zur von elektronischen Bauteilen, um einen Ladungsausgleich zwischen Batteriezellen, die in Reihe geschaltet sind, zu ermöglichen. Wenn ein solches Balancing-Verfahren auf Geräte- bzw. Akkumulator-Ebene realisiert werden soll, sind für eine solche Anordnung häufig eine Vielzahl von Bauteilen und Steckverbindungen erforderlich, beispielsweise verschiedene Schaltelement, Treiber, Induktivitäten und Strommessvorrichtungen. Solche Anordnung sind aufwändig in der Herstellung und fehleranfällig. Die DE 10 2016 206919 A1 zeigt eine Batterievorrichtung mit mehreren Batteriezellen, die zum Bereitstellen einer Gesamtspannung zu einer Reihenschaltung verschaltet sind.

Eine andere Möglichkeit des sogenannten Balancings, d.h. des Ausgleichs zwischen den Energieversorgungsvorrichtungen, besteht darin, die Energieversorgungsvorrichtungen gezielt zu Be- oder Entladen. Hierbei kann insbesondere beim Laden der Energieversorgungsvorrichtungen ihre Ladungszustand SOC überwacht werden. Beim Erreichen einer Ladungs-Obergrenze, beispielsweise bei SOC = 100 %, kann eine Umgehungsleitung ("Bypass") zu der Energieversorgungsvorrichtung aktiviert werden. Dies kann beispielsweise durch einen Widerstand geschehen, in dem Leistung verbraucht wird, so dass ein Überladen der Energieversorgungsvorrichtung verhindert wird. Der Widerstandspfad bleibt so lange aktiviert, bis der Ladungszustand der Energieversorgungsvorrichtungen bzw. ihrer Zellen an- bzw. ausgeglichen ist. Bei dieser Variante des Balancings kann jedoch nur der Ladungsüberschuss in dem Widerstand verbraucht werden. Technisch sinnvoll ist die Anwendung damit nur in Bezug auf das Laden der Energieversorgungseinrichtung. Für den Einsatz dieses Verfahrens im Bereich der Energieabgabe der Energieversorgungsvorrichtung ergibt sich kein technischer Vorteil in der Reichweite der Energieversorgungsvorrichtung. Weiterhin ist dieses Verfahren auch unter dem Gesichtspunkt der Nachhaltigkeit nicht zu bevorzugen.

Die im Stand der Technik bekannten Balancing-Verfahren sind somit entweder mit dem Nachteil verbunden, dass die Ladung der Energieversorgungsvorrichtungen nicht optimal genutzt werden kann, wenn eine Werkzeugmaschine mehrere Energieversorgungsvorrichtungen aufweist, die in Reihe geschaltet sind und bei der kein aktiver Ladungsausgleich zwischen den Energieversorgungsvorrichtungen erfolgt. Wenn aktive Entladungslösungen vorhanden sind, kann der Ladungsüberschuss häufig lediglich in nicht nutzbare Wärme umgewandelt werden, beispielsweise indem die Energie in einem Widerstand verbraucht wird.

Aufgabe der vorliegenden Erfindung ist es daher, die vorstehend beschriebenen Mängel und Nachteile des Standes der Technik zu überwinden und eine verbesserte Werkzeugmaschine mit mindestens zwei Energieversorgungsvorrichtungen sowie ein Verfahren zur Durchführung eines Ladungsausgleichs zwischen Energieversorgungsvorrichtungen in einer Werkzeugmaschine bereitzustellen, bei denen die in den Energieversorgungsvorrichtungen vorhandene Ladung bzw. Energie optimal genutzt werden bzw. für die Werkzeugmaschine nutzbar gemacht werden kann. Dabei soll die Anordnung der Energieversorgungsvorrichtungen in dem Sinne einfach gestaltet sein, dass möglichst nur wenige Bauteile verwendet werden.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

**Beschreibung der Erfindung:**

Die Aufgabe wird dabei in einem ersten Aspekt durch ein Ausgleichsmodul für eine Werkzeugmaschine gelöst, wobei die Werkzeugmaschine einen Motor, sowie mindestens eine erste Energieversorgungsvorrichtung und eine zweite Energieversorgungsvorrichtung umfasst. Die erste Energieversorgungsvorrichtung liegt mit einem ersten Schaltelement und einem dritten Schaltelement des Ausgleichsmoduls und die zweite Energieversorgungsvorrichtung liegt mit einem zweiten Schaltelement und einem vierten Schaltelement des Ausgleichsmoduls verbunden vor, wobei zwischen einem Mittelabgriff der Energieversorgungsvorrichtungen der Werkzeugmaschine und den Schaltelementen des Ausgleichsmoduls eine erste und eine zweite Spule angeordnet ist, wobei die Spulen dazu eingerichtet sind, dass durch die Spulen ein Ausgleichsstrom I_bal fließt. Mit der Erfindung kann die in den Energieversorgungsvorrichtungen zur Verfügung stehende Ladung in einem höheren Grad für die Werkzeugmaschine nutzbar gemacht werden, so dass die in den Energieversorgungsvorrichtungen enthaltene Energie besser genutzt werden kann als bei konventionellen Balancing-Verfahren, wie sie aus dem Stand der Technik bekannt sind. Auch wenn das vorgeschlagene Ausgleichsmodul und das vorgeschlagene Ausgleichsverfahren vorwiegend für eine Werkzeugmaschine mit zwei Energieversorgungsvorrichtungen beschrieben wird, kann die Werkzeugmaschine selbstverständlich auch mehr als zwei Energieversorgungsvorrichtungen aufweisen. Es können dann mehrere Ausgleichsmodule in der Werkzeugmaschine vorgesehen sein, wobei die Ausgleichsmodule dann jeweils in den Mittelabgriffen zwischen je zwei Energieversorgungsvorrichtungen vorgesehen sein können. Die Erfindung betrifft insbesondere ein Ausgleichsmodul, das als zweikanaliger Balancer ausgebildet ist.

Es ist im Sinne der Erfindung ganz besonders bevorzugt, dass die erste Spule zwischen dem Mittelabgriff auf der einen Seite und dem ersten bzw. dem zweiten Schaltelement auf der anderen Seite angeordnet vorliegt. Analog dazu kann die zweite Spule zwischen dem Mittelabgriff auf der einen Seite und dem dritten bzw. dem vierten Schaltelement auf der anderen Seite angeordnet vorliegen.

Ein besonderer Vorteil der Erfindung besteht darin, dass der Ladungsausgleich zwischen den Energieversorgungsvorrichtungen zu allen Zeiten stattfinden kann, insbesondere unabhängig davon, ob die Werkzeugmaschine betrieben wird oder nicht. Mit anderen Worten kann ein Ladungsausgleich zwischen den Energieversorgungsvorrichtungen der Werkzeugmaschine mit dem vorgeschlagenen Ausgleichsmodul bzw. durch das vorgeschlagene Ausgleichsverfahren auch dann erfolgen, wenn die Werkzeugmaschine gerade nicht betrieben wird, d.h. wenn die Werkzeugmaschine nicht eingeschaltet ist. Insbesondere kann der Ladungsausgleich zwischen den Energieversorgungsvorrichtungen vor oder während des Betriebs der Werkzeugmaschine erfolgen. Durch die direkte Einbindung des Ausgleichsmoduls in die Werkzeugmaschine kann der Ausgleichsstrom I_bal optimal an einen Betriebszustand der Werkzeugmaschine angepasst werden. Diese Optimierung kann insbesondere unter Beachtung der Ladeströme der Energieversorgungsvorrichtungen erfolgen. Es ist im Sinne der Erfindung bevorzugt, dass das vorgeschlagene Ausgleichsmodul dazu in der Lage ist, Energie von einer Energieversorgungsvorrichtung der Werkzeugmaschine an eine andere Energieversorgungsvorrichtung der Werkzeugmaschine zu übertragen. Dadurch kann vorteilhafterweise ein Ladungsausgleich zwischen den Energieversorgungsvorrichtungen bewirkt werden. Der Ladungsausgleich erfolgt insbesondere durch den Ausgleichsstrom I_bal.

Es ist im Sinne der Erfindung bevorzugt, dass das vorgeschlagene Ausgleichsmodul drei Leistungsanschlüsse aufweist. Vorzugsweise kann das Ausgleichsmodul mit einem Minuspol der zweiten Energieversorgungsvorrichtung verbunden sein, wobei dieser Minuspol der zweiten Energieversorgungsvorrichtung im Sinne der Erfindung bevorzugt als "Masse" bezeichnet wird. Darüber hinaus kann das Ausgleichsmodul mit einem Pluspol der ersten Energieversorgungsvorrichtung verbunden vorliegen, wobei an diesem Pluspol der ersten Energieversorgungsvorrichtung vorzugsweise die Busspannung V+ anliegt. Darüber hinaus kann das Ausgleichsmodul mit einem sog. Mittelabgriff zwischen den Energieversorgungsvorrichtungen der Werkzeugmaschine verbunden vorliegen. Wenn die Werkzeugmaschine mehr als zwei Energieversorgungsvorrichtungen aufweist, können vorzugsweise auch mehr als ein Mittelabgriff in der Werkzeugmaschine vorgesehen sein, wobei je ein Mittelabgriff zwischen zwei Energieversorgungsvorrichtungen der Werkzeugmaschine angeordnet vorliegt. Der Mittelabgriff stellt vorzugsweise eine leitende Verbindung zwischen den Energieversorgungsvorrichtungen und dem Ausgleichsmodul für die Werkzeugmaschine dar, wobei insbesondere der Ausgleichsstrom I_bal durch den Mittelabgriff des Ausgleichsmoduls fließt. Der Mittelabgriff umfasst vorzugsweise die erste Spule des Ausgleichsmoduls, wobei auch durch diese erste Spule der Ausgleichsstrom I_bal fließt. Es ist im Kontext der vorliegenden Erfindung bevorzugt, dass die Spule als elektromagnetisches Speicherelement dient.

Das erste Schaltelement, das zweite Schaltelement und die erste Spule des Ausgleichsmoduls bilden eine erste Halbbrücke, wobei durch eine Ansteuerung der Halbbrücke der Ausgleichsstrom I_bal einstellbar ist. Das vorgeschlagene Ausgleichsmodul kann im Sinne der Erfindung bevorzugt auch als "Balancer" bezeichnet werden. Bei einem "einkanaligen Balancer" kann das Ausgleichsmodul eine Halbbrücke mit zwei Schaltelementen umfassen, wobei die Habbrücke über eine Spule mit dem Mittelabgriff zwischen den Energieversorgungsvorrichtungen verbunden werden kann. Das erfindungsgemäße Ausgleichsmodul umfasst mindestens eine zweite Halbbrücke, so dass das erfindungsgemäße Ausgleichsmodul als "zweikanaliger Balancer" bezeichnet wird. Im Fall von zwei Halbbrücken ist es im Sinne der Erfindung besonders bevorzugt, dass die beiden Halbbrücken phasenverschoben, d.h. komplementär betrieben werden. Darüber hinaus kann es im Sinne der Erfindung auch bevorzugt sein, dass der Balancer aus weiteren n Kanälen gebildet und dann entsprechend als "n-kanaliger Balancer" bezeichnet wird. Die Schaltelemente des Ausgleichsmoduls können von Feldeffekttransistoren (FET) oder Bipolartransistoren mit isolierter Gate-Elektrode (IGBT), also Schaltvorrichtungen bzw. Schaltem, gebildet werden. Es kann darüber hinaus auch bevorzugt sein, dass eines der zwei Schaltelemente von einer Diode gebildet wird. Durch die Ersetzung eines der Schaltelemente durch eine Diode kann die Komplexität der Ausgleichsmodule verringert werden und es können besonders kostengünstige Ausgleichsmodule erhalten werden.

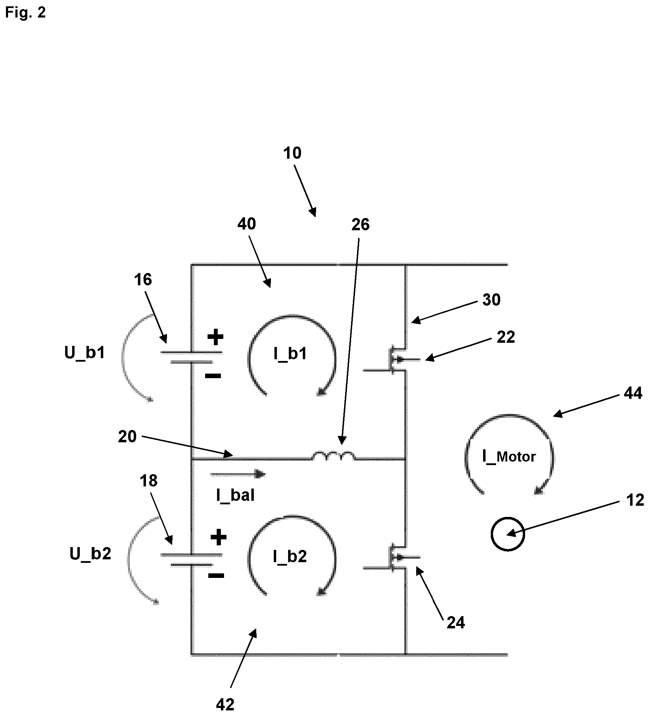

Es ist im Sinne der Erfindung bevorzugt, dass die erste Halbbrücke so angesteuert werden kann, dass sich ein gewünschter Ausgleichsstrom I_bal in der ersten Spule des Ausgleichsmoduls einstellt. Mit anderen Worten kann der Ausgleichsstrom I_bal in der ersten Spule durch eine geeignete Ansteuerung des ersten Schaltelements und des zweiten Schaltelements des Ausgleichsmoduls eingestellt werden. Das bedeutet im Sinne der Erfindung bevorzugt, dass die Schaltelemente der Halbbrücke beispielsweise zeitlich zueinander versetzt geöffnet und geschlossen werden können. Selbstverständlich können die Schaltelemente auch beide geöffnet vorliegen. Wenn beispielsweise - wie in Figur 2 dargestellt - die zweite Energieversorgungsvorrichtung eine höhere Spannung aufweise als die erste Energieversorgungsvorrichtung, kann der gewünschte Ausgleichsstrom I_bal in der ersten Spule aus der zweiten Energieversorgungsvorrichtung aufgeladen werden, wenn das zweite Schaltelement geschlossen ist, und durch Umschalten auf das erste Schaltelement in die erste Energieversorgungsvorrichtung entladen werden. Dabei wird vorzugsweise das zweite Schaltelement geöffnet, während das erste Schaltelement geschlossen wird.

Das Ausgleichsmodul umfasst eine zweite Halbbrücke, wobei die zweite Habbrücke ein drittes Schaltelement und ein viertes Schaltelement aufweist, sowie eine zweite Spule. Die zweite Halbbrücke liegt vorzugsweise über die zweite Spule mit dem Mittelabgriff des Ausgleichsmoduls verbunden vor, so dass ein "zweikanaliges" Ausgleichsmodul erhalten wird. Mit anderen Worten liegt die erste Energieversorgungsvorrichtung mit einem ersten Schaltelement und einem dritten Schaltelement des Ausgleichsmoduls verbunden vor, während die zweite Energieversorgungsvorrichtung mit einem zweiten Schaltelement und einem vierten Schaltelement des Ausgleichsmoduls verbunden vorliegt. Zwischen den Energieversorgungsvorrichtungen liegt der Mittelabgriff des Ausgleichsmoduls angeordnet vor, wobei zwischen dem Mittelabgriff der Energieversorgungsvorrichtungen der Werkzeugmaschine und den Schaltelementen des Ausgleichsmoduls eine erste und eine zweite Spule angeordnet sind, die dazu eingerichtet sind, dass durch die Spulen ein Ausgleichsstrom I_bal fließt. In dieser bevorzugten Ausgestaltung der

Erfindung teilt sich der Ausgleichsstrom I_bal vorzugsweise auf die erste Spule und die zweite Spule des Ausgleichsmoduls auf. Wie die Schaltelemente der ersten Halbbrücke können auch die Schaltelemente der zweiten Halbbrücke mit je einem Pluspol und einem Minuspol der Energieversorgungsvorrichtungen verbunden vorliegen. Darüber hinaus kann die zweite Halbbrücke mit Hilfe der zweiten Spule mit dem Mittelabgriff zwischen den Energieversorgungsvorrichtungen verbunden werden, so dass der Ausgleichsstrom I_bal ebenfalls auf die erste und die zweite Spule aufgeteilt werden kann. Durch die Vorsehung der zweiten Halbbrücke und ein bevorzugt phasenverschobenes, d.h. komplementäres Schalten in den Ausgleichsmodul kann ein besonders glatter Stromverlauf ermöglicht werden. Dies vor allem im Umladefall, d.h. beim Laden der Energieversorgungsvorrichtung mit geringerem Ladungszustand durch die Energieversorgungsvorrichtung mit höherem Ladungszustand. Ein glatter Stromverlauf ist im Kontext der vorliegenden Erfindung insbesondere durch einen geringen Ripple-Strom gekennzeichnet. Der Ripple-Strom stellt dabei vorzugsweise einen AC-Anteil in einem Strom dar. Der AC-Anteil stellt eine Schwankung in einem ansonsten im Wesentlichen konstanten DC-Strom dar, wobei diese unerwünschten Schwankungen durch die Erfindung erheblich reduziert werden können.

Es ist im Sinne der Erfindung bevorzugt, dass die erste Halbbrücke und die zweite Halbbrücke versetzt zueinander ansteuerbar sind. Der Begriff "versetzt" wird im Sinne der Erfindung als "phasenverschoben" verstanden. Die versetzte Ansteuerung der beiden Halbbrücken des vorgeschlagenen Ausgleichsmoduls kann einen weiteren Beitrag dazu leisten, dass die unerwünschten AC-Schwankungen in dem ansonsten im Wesentlichen konstanten DC-Strom erheblich reduziert werden können.

Es ist im Sinne der Erfindung bevorzugt, dass die erste und die zweite Halbbrücke um 180° phasenverschoben, d.h. komplementär zueinander ansteuerbar sind. Es kann im Sinne der Erfindung auch bevorzugt sein, dass die erste Halbbrücke und die weiteren Halbbrücken phasenverschoben zueinander angesteuert werden könne.

Es kann im Sinne der Erfindung auch bevorzugt sein, dass das Ausgleichsmodul n weitere Halbbrücken mit jeweils zwei Schaltelementen, sowie weitere Spulen umfasst, wobei die weiteren Halbbrücken über die weiteren Spulen mit einem Mittelabgriff des Ausgleichsmoduls verbunden vorliegen. Dabei kann der Ausgleichsstrom I_bal vorteilhafterweise auf die weiteren Spulen aufgeteilt werden.

In einem zweiten Aspekt betrifft die Erfindung eine Werkzeugmaschine mit einem Motor, sowie mindestens einer ersten und einer zweiten Energieversorgungsvorrichtung, wobei die Werkzeugmaschine ein Ausgleichsmodul nach einem der vorhergehenden Ansprüche umfasst. Die für das vorgeschlagene Ausgleichsmodul beschriebenen Definitionen, technischen Wirkungen und Vorteile gelten für die Werkzeugmaschine und das später beschriebene Balancing- oder Ladungsausgleichsverfahren analog.

Es ist im Sinne der Erfindung bevorzugt, dass sich der Ausgleichsstrom I_bal nach folgender Formel berechnet:

$$I\_bal = - I\_b1 + I\_b2 +/- I\_Motor,$$

wobei I_b1 der zulässige Ladestrom der ersten Energieversorgungsvorrichtung ist und I_b2 der zulässige Ladestrom der zweiten Energieversorgungsvorrichtung ist und I_Motor der Antriebsstrom ist, der durch den Motor der Werkzeugmaschine fließt. Mit anderen Worten lässt sich der mögliche Ausgleichsstrom I_bal aus den zulässigen Ladeströmen der Energieversorgungsvorrichtungen der Werkzeugmaschine, sowie aus dem Motorstrom I_Motor der Werkzeugmaschine ermitteln. Der Strom I_Motor der Werkzeugmaschine stellt vorzugsweise den Strom dar, der in die Werkzeugmaschine fließt, um den Motor anzutreiben, wobei dieser Strom I_Motor vorzugsweise nicht dem Motorphasenstrom entspricht. Es ist im Sinne der Erfindung bevorzugt, dass der Strom I_Motor der Werkzeugmaschine in Abhängigkeit von den Ladezuständen SOC der Energieversorgungsvorrichtungen berücksichtigt wird.

Es ist im Sinne der Erfindung bevorzugt, dass die Werkzeugmaschine Kommunikationsmittel umfasst, wobei die Kommunikationsmittel einen Informationsaustausch zwischen den Energieversorgungsvorrichtungen, einer Antriebseinheit der Werkzeugmaschine und/oder dem Ausgleichsmodul ermöglicht. Die Antriebseinheit umfasst vorzugsweise den Motor der Werkzeugmaschine. Die Kommunikationsfunktion der Energieversorgungsvorrichtungen kann insbesondere von einem Batterie- oder Zellmanagementsystem (BMS oder ZMS) übernommen bzw. ausgeführt werden, wobei das Batterie- oder Zellmanagementsystem vorzugsweise dazu eingerichtet ist, die Energieversorgungsvorrichtungen, ihre Zellen, sowie die Energieaufnahme und/oder Energieabgabe der Energieversorgungsvorrichtungen zu steuern.

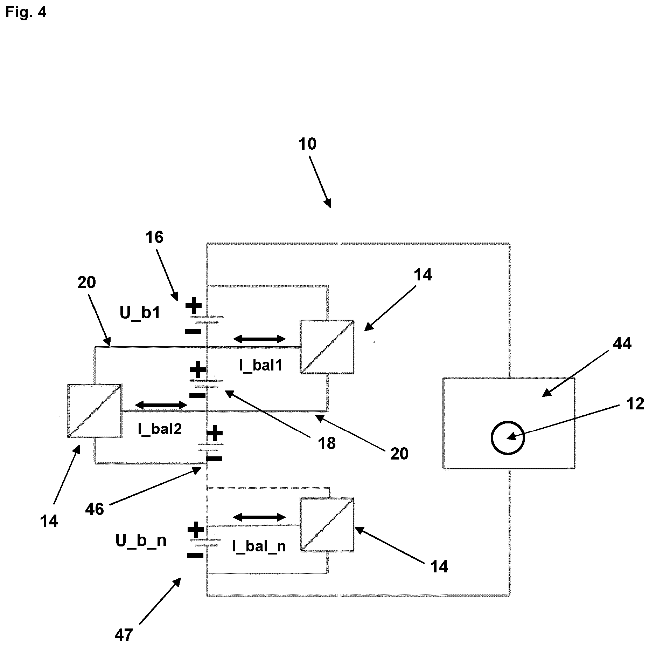

Insbesondere dann, wenn die Werkzeugmaschine mehr als zwei Energieversorgungsvorrichtungen umfasst, ist es im Sinne der Erfindung bevorzugt, dass die Ausgleichsmodule kaskadierend innerhalb der Werkzeugmaschine angeordnet vorliegen. Der Begriff "kaskadierend" wird im Sinne der Erfindung so verstanden, dass die jedes Ausgleichsmodul zwei Energieversorgungsvorrichtungen überspannt. Eine entsprechende kaskadierende Anordnung von Ausgleichsmodulen ist in Fig. 4 dargestellt. Bei der kaskadierenden Anordnung von Ausgleichsmodulen ist beispielsweise das erste Ausgleichsmodul über entsprechende Leistungsanschlüsse mit dem Pluspol der erste Energieversorgungsvorrichtung, dem Minuspol der zweiten Energieversorgungsvorrichtung und dem Mittelabgriff zwischen der ersten und der zweiten Energieversorgungsvorrichtung verbunden.

Der Leistungsanschluss des ersten Ausgleichsmoduls, der mit dem Minuspol der zweiten Energieversorgungsvorrichtung verbunden ist, stellt gleichzeitig den Mittelabgriff des zweiten Ausgleichsmoduls dar. Darüber hinaus kann das zweite Ausgleichsmodul über entsprechende Leistungsanschlüsse mit dem Mittelabgriff zwischen der ersten Energieversorgungsvorrichtung und der zweiten Energieversorgungsvorrichtungen verbunden werden, sowie mit dem Minuspol der dritten Energieversorgungsvorrichtung. Durch die kaskadierte Anordnung der Ausgleichsmodule kann die Ausgestaltung der einzelnen Ausgleichsmodule besonders einfach gehalten werden, so dass die Komplexität des Bauteils verringert und Kosten eingespart werden können.

Es ist im Sinne der Erfindung bevorzugt, dass die Ausgleichsmodule in der Lage dazu sind, Energie in beide Richtungen zu übertragen. Das bedeutet im Sinne der Erfindung bevorzugt, dass beispielsweise das n-te Ausgleichsmodul dazu in der Lage ist, sowohl Energie von der n-ten zur (n+1)-ten Energieversorgungsvorrichtung zu übertragen, als auch von der (n+1)-ten Energieversorgungsvorrichtung an die n-te Energieversorgungsvorrichtung.

Darüber hinaus kann das abschließende Ausgleichsmodul, das im Sinne der Erfindung bevorzugt als n-tes Ausgleichsmodul bezeichnet werden kann, dazu eingerichtet sein, einen etwaigen Energieüberschuss zu verbrauchen. Um einen etwaigen Energieüberschuss zu verbrauchen, kann im Diodenpfad des Ausgleichsmoduls ein Widerstand vorgesehen sein. Vorzugsweise kann mit der Erfindung ein Paket von Zellen innerhalb der Energieversorgungsvorrichtung überspannt werden. Ein Ausgleichsmodul, wie es im Kontext der vorliegenden Erfindung vorgeschlagen wird, kann vorteilhafterweise dazu verwendet werden, Ladungen zwischen Energievorrichtungen, beispielsweise in einer Werkzeugmaschine, auszugleichen.

Mithin wird eine kaskadierende Anordnung von Ausgleichsmodulen in einer Werkzeugmaschine offenbart, wobei jedes Ausgleichsmodul mindestens zwei Schaltelemente aufweist, die als Schalter oder als Dioden ausgebildet sein können. Die Ausgleichsmodule können so in der Werkzeugmaschine angeordnet sein, dass jedes Ausgleichsmodul zwei Energieversorgungsvorrichtungen überspannt. Beispielsweise überspannt das erste Ausgleichsmodul in dem in Fig. 4 abgebildeten Ausführungsbeispiel der Erfindung die erste und die zweite Energieversorgungsvorrichtung, während das zweite Ausgleichsmodul die zweite und die dritte Energieversorgungsvorrichtung überspannt.

In einem Ausführungsbeispiel der Erfindung weisen die Ausgleichsmodule jeweils drei Leistungsanschlüsse V+ (Busspannung), V- (Masse) und V_center (Mittelabgriff) auf. Die Ausgleichsmodule können jeweils einen oder mehrere Kanäle aufweisen, d.h. ein- oder mehrkanalig ausgebildet sein. Es ist im Sinne der Erfindung bevorzugt, dass ein Kanal eine Spule und eine Halbbrücke umfasst. Ein mehrkanaliger Balancer kann somit mehrere Funktionsblöcke aus Spule und Halbbrücke umfassen, wobei die Funktionsblöcke im Sinne der Erfindung bevorzugt als "Kanal" bezeichnet werden. Gemäß einem Ausführungsbeispiel der Erfindung können die Ausgleichsmodule ein erstes und ein zweites Schaltelement aufweisen, wobei die Schaltelemente beispielsweise als MOS-FET ausgebildet sein können. Eines der Schaltelemente kann vorzugsweise als Diode ausgebildet sein. Darüber hinaus ist in den Ausgleichsmodulen eine Spule mit einer Induktivität L vorgesehen.

In einem weiteren Aspekt betrifft die Erfindung ein Verfahren zum Ladungsausgleich zwischen einer ersten Energieversorgungsvorrichtung und einer zweiten Energieversorgungsvorrichtung in einer Werkzeugmaschine mit einem Motor, wobei das Ausgleichsverfahren durch die folgenden Verfahrensschritte gekennzeichnet ist:

a) Bereitstellung eines Ausgleichsmoduls

- mit einem ersten Schaltelement und einem dritten Schaltelement, wobei das erste und dritte Schaltelement mit der ersten Energieversorgungsvorrichtung verbunden vorliegen, und
- mit einem zweiten Schaltelement und einem vierten Schaltelement, wobei das zweite und vierte Schaltelement mit der zweiten Energieversorgungsvorrichtung verbunden vorliegen,

b) Bereitstellung einer ersten Spule und einer zweiten Spule zwischen einem Mittalabgriff der Energieversorgungsvorrichtungen und den Schaltelementen,

c) Einstellung eines Ausgleichsstroms I_bal in der ersten und in der zweiten Spule durch eine geeignete Ansteuerung der Schaltelemente des Ausgleichsmoduls.

Es ist im Sinne der Erfindung bevorzugt, dass der Ausgleichsstrom I_bal auf die erste Spule und eine zweite Spule aufgeteilt wird, wenn das Ausgleichsmodul zwei Halbbrücken und zwei Spulen umfasst, wobei die zweite Spule eine zweite Halbbrücke des Ausgleichsmoduls mit einem Mittelabgriff des Ausgleichsmoduls verbindet. Die zweite Halbbrücke weist ein drittes und ein viertes Schaltelement auf. Es ist im Sinne der Erfindung ganz besonders bevorzugt, dass die erste Halbbrücke und die zweite Halbbrücke versetzt zueinander, d.h. phasenverschoben angesteuert werden können. Es kann im Sinne der Erfindung auch bevorzugt sein, dass die Halbbrücken phasenverschoben zueinander angesteuert werden, um den Stromripple durch die Energieversorgungsvorrichtungen zu minimieren.

Es ist im Sinne der Erfindung bevorzugt, dass zwischen den Energieversorgungsvorrichtungen und den Schaltelementen des Ausgleichsmoduls die erste und die zweite Spule des Ausgleichsmoduls vorliegen. Vorzugsweise kann der Ausgleichsstrom I_bal insbesondere durch eine geeignete Ansteuerung des ersten und/oder des zweiten Schaltelements des Ausgleichsmoduls eingestellt werden. Selbstverständlich ist es auch möglich, dass der Ausgleichsstrom I_bal durch eine geeignete Ansteuerung des dritten und/oder des vierten Schaltelements des Ausgleichsmoduls eingestellt wird. Mit anderen Worten kann der Ausgleichsstrom I_bal durch eine geeignete Ansteuerung der Schaltelemente des Ausgleichsmoduls eingestellt werden.

In einem weiteren Verfahrensschritt kann ein Sollwert des Ausgleichsstroms I_bal aus dem Betriebszustand der Energieversorgungsvorrichtungen bestimmt werden. Der Betriebszustand der Energieversorgungsvorrichtung kann beispielsweise von einer Spannung, einem Ladungszustand und/oder einer Temperatur der Energieversorgungsvorrichtung abhängen. Die Bestimmung des Sollwerts des Ausgleichsstroms I_bal aus dem Betriebszustand der Energieversorgungsvorrichtungen erfolgt vorzugsweise mit dem Ziel der optimalen Energieentnahme aus der Energieversorgungsvorrichtung und der damit verbundenen vollständigen Entladung der Energieversorgungsvorrichtung.

Es ist im Sinne der Erfindung bevorzugt, dass im Kontext der vorliegenden Erfindung nicht nur ein Ladungsausgleich zwischen den Energieversorgungsvorrichtungen der Werkzeugmaschine erfolgt. Der Begriff "Ladungsausgleich" wird im Sinne der Erfindung vielmehr breiter verstanden, so dass auch ein Ausgleich von Temperaturen oder Alterungszuständen mit der Erfindung erfolgen kann. Es ist im Sinne der Erfindung bevorzugt, dass aufgrund des Ladungsausgleichs Ströme fließen, wobei sich durch ungleichmäßige Strombelastungen auch unterschiedliche Wärmeverteilungen ergeben können. Die Energieversorgungsvorrichtung kann vorteilhafterweise so in Abhängigkeit von ihrem Ladungszustand und/oder den Temperaturen in den Zellen gesteuert werden, dass die Ladungsentnahme vor Erreichen einer Abschaltgrenze durch das Ausgleichsmodul maximiert wird.

Es ist im Sinne der Erfindung bevorzugt, dass die Energieversorgungsvorrichtungen, deren Ladestände ausgeglichen werden sollen, gleiche oder im Wesentlichen gleiche Nominalspannungen aufweisen. Es kann aber im Sinne der Erfindung auch bevorzugt sein, dass die Energieversorgungsvorrichtungen unterschiedliche Nominalspannungen aufweisen. Beispielsweise können im Kontext der vorliegenden Erfindung zwei unterschiedliche Energieversorgungsvorrichtungen mit Spannungen von 12 V und 36 V miteinander in einer Werkzeugmaschine vorliegen. Bei solchen Kombinationen von Energieversorgungsvorrichtungen mit verschiedenen Ausgleichsspannungen kann angestrebt werden, dass die Energieversorgungsvorrichtungen nach dem Ausgleichsvorgang gleiche oder im Wesentlichen gleich Ladezustände aufweisen. Es kann aber auch bevorzugt sein, dass sich die Ladestände lediglich angleichen. Der Begriff "angleiche" bedeutet im Sinne der Erfindung bevorzugt, dass eine Differenz der Ladestände zwischen den Energieversorgungsvorrichtungen verringert wird.

Es ist im Sinne der Erfindung bevorzugt, dass die Energieversorgungsvorrichtungen innerhalb der Werkzeugmaschine in Reihe geschaltet vorliegen können. Dabei ist eine Reihenschaltung der Akkus besonders bevorzugt, um die bereitzustellende Leistung bei gleichbleibenden Strömen zu verdoppeln. Außerdem wird bei einer Reihenschaltung ein unkontrollierter Ladungsausgleich zwischen den Akkumulatoren vermieden. Ein solcher unerwünschter, unkontrollierter Ladungsausgleich kann dann vorkommen, wenn unterschiedliche Anfangs-Spannungen der Akkumulatoren vorliegen.

Durch die Erfindung kann die gesamte in den Energieversorgungsvorrichtungen gespeicherte Energie umgesetzt und für den Betrieb der Werkzeugmaschine genutzt werden. Dadurch kann vorteilhafterweise die Laufzeit der Werkzeugmaschine verlängert werden, ohne dass die Energieversorgungsvorrichtungen ausgetauscht oder aufgeladen werden müssen.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:

Fig. 1    schematische Darstellung eines Ausgleichsmoduls für eine Werkzeugmaschine

Fig. 2    schematische Darstellung eines einkanaligen Balancers

Fig. 3    schematische Darstellung eines Ausführungsbeispiels des vorgeschlagenen Ausgleichsmoduls als zweikanaliger Balancer

Fig. 4    schematische Darstellung eines Ausführungsbeispiels einer kaskadierenden Anordnung von Ausgleichsmodulen in einer Werkzeugmaschine

Fig. 5    schematische Darstellung von zwei Ausführungsbeispielen eines Ausgleichsmoduls

**Ausführungsbeispiele und Figurenbeschreibung:**

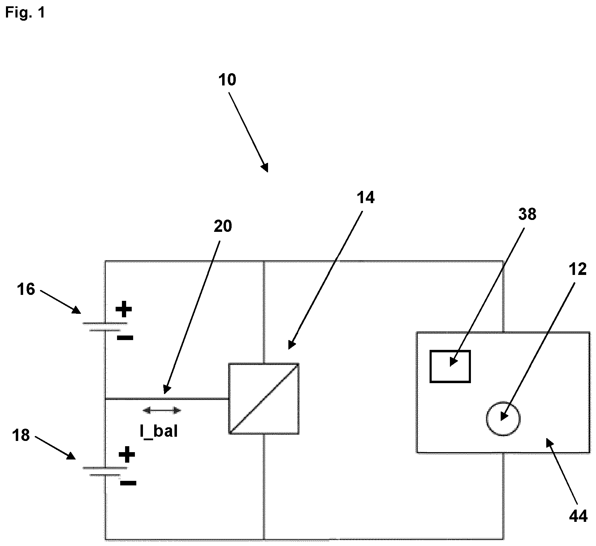

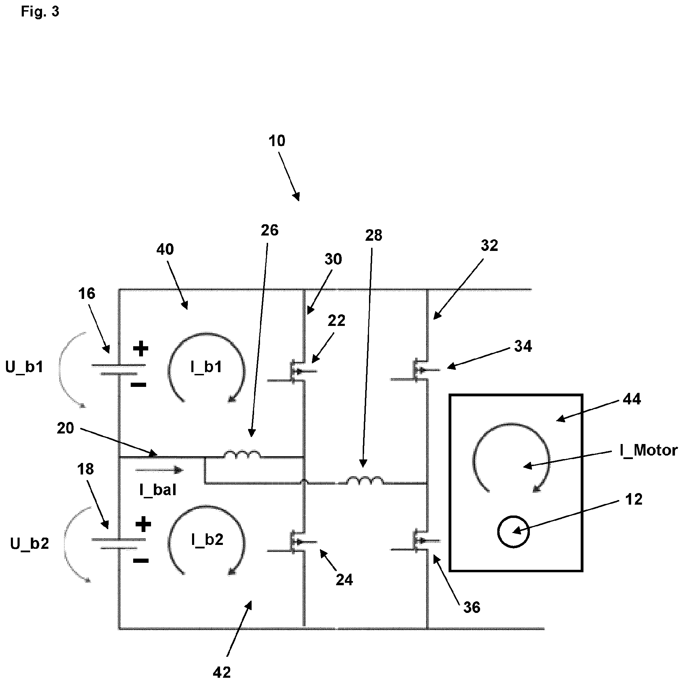

Fig. 1 zeigt ein Ausgleichsmodul 14 für eine Werkzeugmaschine 10. Die Werkzeugmaschine 10 weist eine erste Energieversorgungsvorrichtung 16 und eine zweite Energieversorgungsvorrichtung 18 auf, sowie einen Motor 12. Der Motor 12 kann in einer Antriebseinheit 44 der Werkzeugmaschine 10 integriert vorliegen. Darüber hinaus kann die Werkzeugmaschine 10 Kommunikationsmittel 38 aufweisen, mit der ein Informationsaustausch zwischen den Energieversorgungsvorrichtungen 16, 18, der Antriebseinheit 44 und einem Ausgleichsmodul 14 ermöglicht werden kann. Das Ausgleichsmodul 14 ist in Figur 1 schematisch als black box dargestellt. Einzelheiten zu möglichen Ausgestaltungen des Ausgleichsmoduls 14 werden in den Figuren 2 und 3 dargestellt. Zwischen den Energieversorgungsvorrichtungen 16, 18 liegt der Mittelabgriff 20 angeordnet vor, der vorzugsweise eine erste Spule 26 (in Fig. 1 nicht dargestellt, siehe Fig. 2 und 3) aufweist. Durch den Mittelabgriff 20 kann der Ausgleichsstrom I_bal fließen. In dem in Fig. 1 dargestellten Ausführungsbeispiel der Erfindung ist der Mittelabgriff 20 mit dem Minuspol der ersten Energieversorgungsvorrichtung 16 und dem Pluspol der zweiten Energieversorgungsvorrichtung 18 der Werkzeugmaschine 10 verbunden. Das Ausgleichsmodul 14 weist drei Leistungsanschlüsse auf, die mit dem Mittelabgriff 20, sowie dem Pluspol der ersten Energieversorgungsvorrichtung 16 und dem Minuspol der zweiten Energieversorgungsvorrichtung 18 der Werkzeugmaschine 10 verbunden sind. Die Pluspole der Energieversorgungsvorrichtungen 16, 18 werden in den Figuren mit einem Pluszeichen bezeichnet, während die Minuspole der Energieversorgungsvorrichtungen 16, 18 mit einem Minuszeichen bezeichnet werden.

Fig. 2 zeigt eine schematische Darstellung eines einkanaligen Balancers. Das in Figur 2 abgebildete Ausgleichsmodul 14 weist eine erste Halbbrücke 30 auf, die ein erstes Schaltelement 22 und ein zweites Schaltelement 24 aufweist. Das erste Schaltelement 22, die erste Energieversorgungsvorrichtung 16 und der Mittelabgriff 20 bzw. die erste Spule 26 bilden einen ersten Stromkreis 40, in dem der erste Strom I_b1 fließen kann. Der bevorzugt negative erste Strom I_b1 stellt vorzugsweise den maximal zulässigen Ladestrom der ersten Energieversorgungsvorrichtung 16 dar. Das zweite Schaltelement 24, die zweite Energieversorgungsvorrichtung 18 und der Mittelabgriff 20 bzw. die erste Spule 26 bilden einen zweiten Stromkreis 42, in dem der zweite Strom I_b2 fließen kann. Der bevorzugt negative zweite Strom I_b2 stellt vorzugsweise den maximal zulässigen Ladestrom der zweiten Energieversorgungsvorrichtung 18 dar. An der ersten Energieversorgungsvorrichtung 16 liegt eine erste Spannung U_b1 an, während an der zweiten Energieversorgungsvorrichtung 18 eine zweite Spannung U_b2 anliegt. Durch den Mittelabgriff 20 bzw. die erste Spule 26 fliesst der Ausgleichsstrom I_bal. Das Ausgleichsmodul 14 kann in einer Werkzeugmaschine 10 integriert vorliegen, wobei die Werkzeugmaschine 10 darüber hinaus eine Antriebseinheit 44 und einen Motor aufweisen kann. Der Strom, der von den Energieversorgungsvorrichtungen 16, 18 und/oder durch das Ausgleichsmodul 14 in den Motor 12 der Werkzeugmaschine 10 fließt, wird in den Figuren 2 und 3 als I_Motor bezeichnet.

Fig. 3 zeigt eine schematische Darstellung eines Ausführungsbeispiels des vorgeschlagenen Ausgleichsmoduls 14 als zweikanaliger Balancer. Neben den in Figur 2 dargestellten Komponenten der Werkzeugmaschine 10 bzw. des Ausgleichsmoduls 14 wird in Figur 3 eine zweite Halbbrücke 32 dargestellt, die ein drittes Schaltelement 34 und ein viertes Schaltelement 36 aufweist. Die zweite Halbbrücke 32 ist Bestandteil einer bevorzugten Ausgestaltung des Ausgleichsmoduls 14 und kann über eine zweite Spule 28 mit dem Mittelabgriff 20 zwischen der ersten Energieversorgungsvorrichtung 16 und der zweiten Energieversorgungsvorrichtung 18 der Werkzeugmaschine 10 verbunden werden.

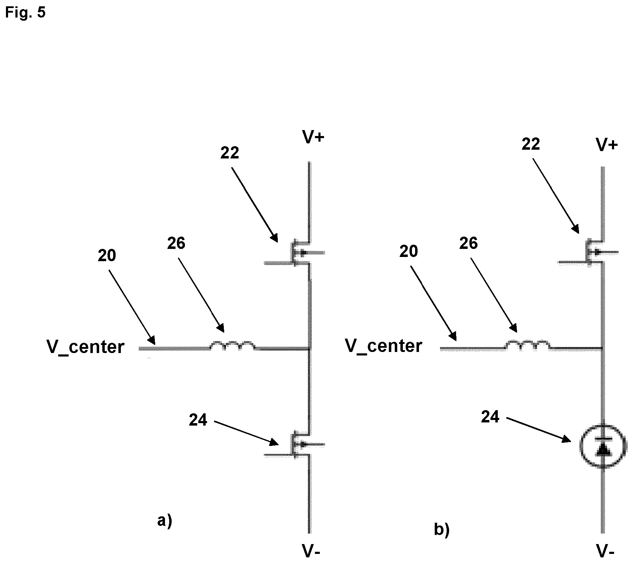

Fig. 4 zeigt eine schematische Darstellung eines Ausführungsbeispiels einer kaskadierenden Anordnung von Ausgleichsmodulen 14 in einer Werkzeugmaschine 10. Die in Fig. 4 dargestellte Schaltung weist eine erste Energieversorgungsvorrichtung 16, eine zweite Energieversorgungsvorrichtung 18, eine dritte Energieversorgungsvorrichtung 46, sowie weitere Energieversorgungsvorrichtungen 47 auf. Darüber hinaus weist die in Fig. 4 dargestellte Schaltung drei Ausgleichsmodule 14 auf, insbesondere ein erstes Ausgleichsmodul (oben), ein zweites Ausgleichsmodul (mittig) und ein n-tes Ausgleichsmodul (unten). Jedes Ausgleichsmodul 14 weist drei Leistungsanschlüsse auf, nämlich einen Anschluss an einen Pluspol + einer Energieversorgungsvorrichtung 16, 18, 46 (V+, Busspannung), einen Anschluss an einen Minuspol + einer Energieversorgungsvorrichtung 16, 18, 46 (V-, Masse) und einen Anschluss an einen Mittelabgriff 20 zwischen je zwei Energieversorgungsvorrichtungen 16, 18, 46 (V_center). Diese drei Leistungsanschlüsse sind auch in Fig. 5 dargestellt, wobei Fig. 5 in seinen Teilfiguren 5a) und 5b) schematische Darstellungen von Ausführungsbeispielen des vorgeschlagenen Ausgleichsmoduls 14 zeigt.

Bei dem in Fig. 4 dargestellten Ausführungsbeispiel der Erfindung überspannen die Ausgleichsmodule 14 jeweils zwei Energieversorgungsvorrichtungen 16, 18, 46, wobei das erste Ausgleichsmodul 14 (oben) beispielsweise die erste Energieversorgungsvorrichtung 16 und die zweite Energieversorgungsvorrichtung 18 überspannt. Das zweite Ausgleichsmodul 14 (mittig) überspannt beispielsweise die zweite Energieversorgungsvorrichtung 18 und eine dritte Energieversorgungsvorrichtung 46, während ein n-tes Ausgleichsmodul 14 (unten) beispielsweise die n-te Energieversorgungsvorrichtung 46 und eine (n+1)-te Energieversorgungsvorrichtung 47 überspannt. An den Energieversorgungsvorrichtungen 16, 18, 46 liegt jeweils die Spannung U_b1, Ub2 bzw. U_b_n an. Die Energieversorgungsvorrichtungen 16, 18, 46 weisen jeweils einen Pluspol + und einen Minuspol - auf, wobei die Pluspole in Fig. 4 jeweils mit einem «+» gekennzeichnet sind und die Minuspole mit einem «-«. Durch die Mittelabgriffe 20 zwischen je zwei Energieversorgungsvorrichtungen 16, 18, 46 fliesst jeweils ein Ausgleichsstrom I_bal , wobei beispielsweise durch den Mittelabgriff 20 zwischen der ersten Energieversorgungsvorrichtung 16 und der zweiten Energieversorgungsvorrichtung 18 der erster Ausgleichsstrom I_bal_1 fliesst.

Die Teilfiguren 5a) und 5b) von Fig. 5 zeigen mögliche Ausgestaltungen des vorgeschlagenen Ausgleichsmoduls 14. Teilfigur 5a) zeigt ein Ausgleichsmodul 14 mit einem ersten Schaltelement 22 und einem zweiten Schaltelement 24, wobei beide Schaltelemente 22, 24 als MOS-FET ausgebildet sein können. Teilfigur 5b) zeigt ein Ausgleichsmodul 14 mit einem ersten Schaltelement 22, das beispielsweise als MOS-FET ausgebildet sein kann, während das zweite Schaltelement 24 als Diode ausgebildet ist. Neben den Schaltelementen 22, 24 umfassen die in Fig. 5 dargestellten Ausgleichsmodule 14 jeweils eine Spule 26, die in einem Mittelabgriff 20 angeordnet vorliegt. Durch diesen Mittelabgriff 20 bzw. durch die Spule 26 fließt jeweils der Ausgleichsstrom I_bal. Das erste Schaltelement 22 des Ausgleichsmoduls 14 ist jeweils mit dem Leistungsanschluss V+ verbunden, währen das zweite Schaltelement 24 des Ausgleichsmoduls 14 mit dem Leistungsanschluss V- verbunden vorliegt. Darüber hinaus weist das Ausgleichsmodul 14 einen dritten Leistungsanschluss V_center auf, der mit dem Mittelabgriff 20 verbunden vorliegt.

**Bezugszeichenliste**

| | |
|---|---|
| 10 | Werkzeugmaschine |
| 12 | Motor der Werkzeugmaschine |
| 14 | Ausgleichsmodul |
| 16 | erste Energieversorgungsvorrichtung |
| 18 | zweite Energieversorgungsvorrichtung |
| 20 | Mittelabgriff |
| 22 | erstes Schaltelement |
| 24 | zweites Schaltelement |
| 26 | erste Spule |
| 28 | zweite Spule |
| 30 | erste Halbbrücke |
| 32 | zweite Halbbrücke |
| 34 | drittes Schaltelement |
| 36 | viertes Schaltelement |
| 38 | Kommunikationsmittel |
| 40 | erster Stromkreis |
| 42 | zweiter Stromkreis |
| 44 | Antriebseinheit |
| 46 | dritte Energieversorgungsvorrichtung |
| 47 | weitere Energieversorgungsvorrichtung |

**Patentansprüche**

1. Ausgleichsmodul (14) für eine Werkzeugmaschine (10), wobei die Werkzeugmaschine (10) einen Motor (12), sowie mindestens eine erste Energieversorgungsvorrichtung (16) und eine zweite Energieversorgungsvorrichtung (18) umfasst,
wobei
die erste Energieversorgungsvorrichtung (16) mit einem ersten Schaltelement (22) und einem dritten Schaltelement (34) des Ausgleichsmoduls (14) und die zweite Energieversorgungsvorrichtung (18) mit einem zweiten Schaltelement (24) und einem vierten Schaltelement (36) des Ausgleichsmoduls (14) verbunden vorliegt, wobei zwischen einem Mittelabgriff (20) der Energieversorgungsvorrichtungen (16, 18) und den Schaltelementen (22, 24, 34, 36) eine erste Spule (26) und eine zweite Spule (28) angeordnet ist, wobei die Spulen (26, 28) dazu eingerichtet sind, dass durch die Spulen (26, 28) ein Ausgleichsstrom I_bal fließt, wobei das erste Schaltelement (22), das zweite Schaltelement (24) und die erste Spule (26) eine erste Halbbrücke (30) für das Ausgleichsmodul (14) bilden und wobei das dritte Schaltelement (34), das vierte Schaltelement (36) und die zweite Spule (28) eine zweite Halbbrücke (32) für das Ausgleichsmodul (14) bilden.

2. Ausgleichsmodul (14) nach Anspruch 1
wobei
die erste Spule (26) in dem Mittelabgriff (20) des Ausgleichsmoduls (14) angeordnet vorliegt, wobei der Mittelabgriff (20) zwischen den Energieversorgungsvorrichtungen (16, 18) der Werkzeugmaschine (10) angeordnet vorliegt.

3. Ausgleichsmodul (14) nach Anspruch 1 oder 2
wobei
durch eine Ansteuerung der ersten Halbbrücke (30) der Ausgleichsstrom I_bal einstellbar ist.

4. Ausgleichsmodul (14) nach einem der vorhergehenden Ansprüche
wobei
die zweite Halbbrücke (32) über die zweite Spule (28) mit dem Mittelabgriff (20) des Ausgleichsmoduls (14) verbunden vorliegt.

5. Ausgleichsmodul (14) nach einem der vorhergehenden Ansprüche
wobei
der Ausgleichsstrom I_bal auf die erste Spule (26) und auf die zweite Spule (28) aufgeteilt wird.

6. Ausgleichsmodul (14) nach einem der vorhergehenden Ansprüche
wobei
die erste Halbbrücke (30) und die zweite Halbbrücke (32) versetzt zueinander ansteuerbar sind.

7. Ausgleichsmodul (14) nach einem der vorhergehenden Ansprüche
wobei
ein erster Stromkreis (40) gebildet wird von der ersten Energieversorgungsvorrichtung (16), dem ersten Schaltelement (22) und der ersten Spule (26), wobei in dem ersten Stromkreis (40) der erste Strom I_b1 fließt, wobei der erste Strom I_b1 der zulässige Ladestrom der ersten Energieversorgungsvorrichtung (16) ist.

8. Ausgleichsmodul (14) nach einem der vorhergehenden Ansprüche
wobei
ein zweiter Stromkreis (42) gebildet wird von der zweiten Energieversorgungsvorrichtung (18), dem zweiten Schaltelement (24) und der ersten Spule (26), wobei in dem zweiten Stromkreis (42) der zweite Strom I_b2 fließt, wobei der zweite Strom I_b2 der zulässige Ladestrom der zweiten Energieversorgungsvorrichtung (18) ist.

9. Werkzeugmaschine (10) mit einem Motor (12), sowie mindestens einer ersten Energieversorgungsvorrichtung (16) und einer zweiten Energieversorgungsvorrichtung (18)
wobei
die Werkzeugmaschine (10) ein Ausgleichsmodul (14) nach einem der vorhergehenden Ansprüche umfasst.

10. Werkzeugmaschine (10) nach Anspruch 9
wobei

sich der Ausgleichsstrom I_bal nach folgender Formel berechnet:

$$I\_bal = - I\_b1 + I\_b2 +/- I\_Motor,$$

wobei I_b1 der zulässige Ladestrom der ersten Energieversorgungsvorrichtung (16) ist und I_b2 der zulässige Ladestrom der zweiten Energieversorgungsvorrichtung (18) ist und I_Motor der Antriebsstrom ist, der durch den Motor (12) der Werkzeugmaschine (10) fließt.

11. Werkzeugmaschine (10) nach Anspruch 9 oder 10
wobei
die Werkzeugmaschine (10) Kommunikationsmittel (38) für einen Informationsaustausch zwischen den Energieversorgungsvorrichtungen (16, 18), einer Antriebseinheit (44) der Werkzeugmaschine (10) und/oder dem Ausgleichsmodul (14) umfasst.

12. Verfahren zum Ladungsausgleich zwischen einer ersten Energieversorgungsvorrichtung (16) und einer zweiten Energieversorgungsvorrichtung (18) in einer Werkzeugmaschine (10) mit einem Motor (12), wobei das Ausgleichsverfahren folgende Verfahrensschritte besitzt:

a) Bereitstellung eines Ausgleichsmoduls (14)

- mit einem ersten Schaltelement (22) und einem dritten Schaltelement (34), wobei das erste Schaltelement (22) und dritte Schaltelement (34) mit der ersten Energieversorgungsvorrichtung (16) verbunden vorliegen, und

- mit einem zweiten Schaltelement (24) und einem vierten Schaltelement (36), wobei das zweite Schaltelement (24) und vierte Schaltelement (36) mit der zweiten Energieversorgungsvorrichtung (18) verbunden vorliegen,

b) Bereitstellung einer ersten Spule (26) und einer zweiten Spule (28) zwischen einem Mittelabgriff (20) der Energieversorgungsvorrichtungen (16, 18) und den Schaltelementen (22, 24, 34, 36),
c) Einstellung eines Ausgleichsstroms I_bal in der ersten Spule (26) und in der zweiten Spule (28) durch eine geeignete Ansteuerung der Schaltelemente (22, 24, 34, 36) des Ausgleichsmoduls (14),

wobei das erste Schaltelement (22), das zweite Schaltelement (24) und die erste Spule (26) eine erste Halbbrücke (30) bilden und wobei das dritte Schaltelement (34), das vierte Schaltelement (36) und die zweite Spule (28) eine zweite Halbbrücke (32) für das Ausgleichsmodul (14) bilden.

13. Verfahren nach Anspruch 12
wobei
der Ausgleichsstrom I_bal auf die erste Spule (26), eine zweite Spule (28) und/oder weitere Spulen verteilt wird, wenn das Ausgleichsmodul (14) eine erste Halbbrücke (30), eine zweite Halbbrücke (32) und/oder weitere Halbbrücken (32) umfasst, wobei die Halbbrücken (30, 32) über die Spulen (26, 28) mit dem Mittelabgriff (20) des Ausgleichsmoduls (14) verbunden sind.

14. Verfahren nach Anspruch 12 oder 13
wobei
die erste Halbbrücke (30) und die zweite Halbbrücke (32) versetzt zueinander angesteuert werden.

## Claims

1. Balancing module (14) for a power tool (10), wherein the power tool (10) comprises a motor (12), and also at least a first power supply device (16) and a second power supply device (18),
wherein
the first power supply device (16) is connected to a first switching element (22) and a third switching element (34) of the balancing module (14), and the second power supply device (18) is connected to a second switching element (24) and a fourth switching element (36) of the balancing module (14), wherein a first coil (26) and a second coil (28) are arranged between a centre tap (20) of the power supply devices (16, 18) and the switching elements (22, 24, 34, 36), wherein the coils (26, 28) are configured such that a balancing current I_bal flows through the coils (26, 28), wherein the first switching element (22), the second switching element (24) and the first coil (26) form a first half-bridge (30) for the balancing module (14), and wherein the third switching element (34), the fourth switching element (36) and the second coil (28) form a second half-bridge (32) for the balancing module (14).

2. Balancing module (14) according to Claim 1, wherein
the first coil (26) is arranged in the centre tap (20) of the balancing module (14), wherein the centre tap (20) is arranged between the power supply devices (16, 18) of the power tool (10).

3. Balancing module (14) according to Claim 1 or 2, wherein
the balancing current I_bal can be adjusted by controlling the first half-bridge (30).

4. Balancing module (14) according to one of the preceding claims,
wherein
the second half-bridge (32) is connected to the centre tap (20) of the balancing module (14) via the second coil (28).

5. Balancing module (14) according to one of the preceding claims,
wherein
the balancing current I_bal is divided across the first coil (26) and the second coil (28).

6. Balancing module (14) according to one of the preceding claims,
wherein
the first half-bridge (30) and the second half-bridge (32) are controllable in a staggered manner with respect to one another.

7. Balancing module (14) according to one of the preceding claims,
wherein
a first circuit (40) is formed by the first power supply device (16), the first switching element (22) and the first coil (26), wherein the first current I_b1 flows in the first circuit (40), wherein the first current I_b1 is the permissible charging current of the first power supply device (16).

8. Balancing module (14) according to one of the preceding claims,
wherein
a second circuit (42) is formed by the second power supply device (18), the second switching element (24) and the first coil (26), wherein the second current I_b2 flows in the second circuit (42), wherein the second current I_b2 is the permissible charging current of the second power supply device (18).

9. Power tool (10) comprising a motor (12), and also at least a first power supply device (16) and a second power supply device (18),
wherein
the power tool (10) comprises a balancing module (14) according to one of the preceding claims.

10. Power tool (10) according to Claim 9, wherein

the balancing current I_bal is calculated by the following formula:

$$I\_bal = - I\_b1 + I\_b2 +/- I\_Motor,$$

wherein I_b1 is the permissible charging current of the first power supply device (16) and I_b2 is the permissible charging current of the second power supply device (18) and I_Motor is the drive current flowing through the motor (12) of the power tool (10).

11. Power tool (10) according to Claim 9 or 10, wherein
the power tool (10) comprises communication means (38) for an exchange of information between the power supply devices (16, 18), a drive unit (44) of the power tool (10) and/or the balancing module (14).

12. Method for charge balancing between a first power supply device (16) and a second power supply device (18) in a power tool (10) having a motor (12), wherein the balancing method has the following method steps:

a) providing a balancing module (14)

- comprising a first switching element (22) and a third switching element (34), wherein the first switching element (22) and third switching element (34) are connected to the first power supply device (16), and
- comprising a second switching element (24) and a fourth switching element (36), wherein the second switching element (24) and fourth switching element (36) are connected to the second power supply device (18),

b) providing a first coil (26) and a second coil (28) between a centre tap (20) of the power supply devices (16, 18) and the switching elements (22, 24, 34, 36),
c) adjusting a balancing current I_bal in the first coil (26) and in the second coil (28) by appropriately controlling the switching elements (22, 24, 34, 36) of the balancing module (14),

wherein the first switching element (22), the second switching element (24) and the first coil (26) form a first half-bridge (30), and wherein the third switching element (34), the fourth switching element (36) and the second coil (28) form a second half-bridge (32) for the balancing module (14).

13. Method according to Claim 12,
wherein
the balancing current I_bal is distributed across the first coil (26), a second coil (28) and/or further coils when the balancing module (14) comprises a first half-bridge (30), a second half-bridge (32) and/or further half-bridges (32), wherein the half-bridges (30, 32) are connected to the centre tap (20) of the balancing module (14) via the coils (26, 28).

14. Method according to Claim 12 or 13,
wherein
the first half-bridge (30) and the second half-bridge (32) are controlled in a staggered manner with respect to one another.

**Revendications**

1. Module d'équilibrage (14) pour une machine-outil (10), la machine-outil (10) comprenant un moteur (12) ainsi qu'au moins un premier dispositif d'alimentation en énergie (16) et un deuxième dispositif d'alimentation en énergie (18),
dans lequel
le premier dispositif d'alimentation en énergie (16) est connecté à un premier élément de commutation (22) et à un troisième élément de commutation (34) du module d'équilibrage (14), et le deuxième dispositif d'alimentation en énergie (18) est connecté à un deuxième élément de commutation (24) et à un quatrième élément de commutation (36) du module d'équilibrage (14), une première bobine (26) et une deuxième bobine (28) étant agencées entre une prise centrale (20) des dispositifs d'alimentation en énergie (16, 18) et les éléments de commutation (22, 24, 34, 36), les bobines (26, 28) étant conçues de telle sorte qu'un courant d'équilibrage I_bal circule à travers les bobines (26, 28), le premier élément de commutation (22), le deuxième élément de commutation (24) et la première bobine (26) formant un premier demi-pont (30) pour le module d'équilibrage (14), et le troisième élément de commutation (34), le quatrième élément de commutation (36) et la deuxième bobine (28) formant un deuxième demi-pont (32) pour le module d'équilibrage (14).

2. Module d'équilibrage (14) selon la revendication 1, dans lequel
la première bobine (26) est agencée dans la prise centrale (20) du module d'équilibrage (14), la prise centrale (20) étant agencée entre les dispositifs d'alimentation en énergie (16, 18) de la machine-outil (10).

3. Module d'équilibrage (14) selon la revendication 1 ou 2,
dans lequel
le courant d'équilibrage I_bal peut être réglé par une commande du premier demi-pont (30).

4. Module d'équilibrage (14) selon l'une des revendications précédentes,
dans lequel
le deuxième demi-pont (32) est connecté à la prise centrale (20) du module d'équilibrage (14) par l'intermédiaire de la deuxième bobine (28).

5. Module d'équilibrage (14) selon l'une des revendications précédentes,
dans lequel
le courant d'équilibrage I_bal est réparti sur la première bobine (26) et sur la deuxième bobine (28).

6. Module d'équilibrage (14) selon l'une des revendications précédentes,
dans lequel
le premier demi-pont (30) et le deuxième demi-pont (32) peuvent être commandés de manière décalée l'un par rapport à l'autre.

7. Module d'équilibrage (14) selon l'une des revendications précédentes,
dans lequel
un premier circuit (40) est formé par le premier dispositif d'alimentation en énergie (16), le premier élément de commutation (22) et la première bobine (26), le premier courant I_b1 circulant dans le premier circuit (40), le premier courant I_b1 étant le courant de charge admissible du premier dispositif d'alimentation en énergie (16).

8. Module d'équilibrage (14) selon l'une des revendications précédentes,
dans lequel
un deuxième circuit (42) est formé par le deuxième dispositif d'alimentation en énergie (18), le deuxième élément de commutation (24) et la première bobine (26), le deuxième courant I_b2 circulant dans le deuxième circuit (42), le deuxième courant I_b2 étant le courant de charge admissible du deuxième dispositif d'alimentation en énergie (18).

9. Machine-outil (10) comprenant un moteur (12) ainsi qu'au moins un premier dispositif d'alimentation en énergie (16) et un deuxième dispositif d'alimentation en énergie (18) dans laquelle la machine-outil (10) comprend un module d'équilibrage (14) selon l'une des revendications précédentes.

10. Machine-outil (10) selon la revendication 9, dans laquelle

le courant d'équilibrage I_bal est calculé selon la formule suivante :

$$I\_bal = -\ I\_b1 + I\_b2 +/-\ I\_Motor,$$

où I_b1 est le courant de charge admissible du premier dispositif d'alimentation en énergie (16), I_b2 est le courant de charge admissible du deuxième dispositif d'alimentation en énergie (18) et I_Motor est le courant d'entraînement qui circule à travers le moteur (12) de la machine-outil (10).

11. Machine-outil (10) selon la revendication 9 ou 10, dans laquelle la machine-outil (10) comprend des moyens de communication (38) pour un échange d'informations entre les dispositifs d'alimentation en énergie (16, 18), une unité d'entraînement (44) de la machine-outil (10) et/ou le module d'équilibrage (14).

12. Procédé d'équilibrage de charge entre un premier dispositif d'alimentation en énergie (16) et un deuxième dispositif d'alimentation en énergie (18) dans une machine-outil (10) comprenant un moteur (12), le procédé d'équilibrage comportant les étapes de procédé suivantes :

a) fourniture d'un module d'équilibrage (14)

- comprenant un premier élément de commutation (22) et un troisième élément de commutation (34), le premier élément de commutation (22) et le troisième élément de commutation (34) étant connectés au premier dispositif d'alimentation en énergie (16), et
- comprenant un deuxième élément de commutation (24) et un quatrième élément de commutation (36), le deuxième élément de commutation (24) et le quatrième élément de commutation (36) étant connectés au deuxième dispositif d'alimentation en énergie (18),

b) fourniture d'une première bobine (26) et d'une deuxième bobine (28) entre une prise centrale (20) des dispositifs d'alimentation en énergie (16, 18) et les éléments de commutation (22, 24, 34, 36),
c) réglage d'un courant d'équilibrage I_bal dans la première bobine (26) et dans la deuxième bobine (28) par une commande appropriée des éléments de commutation (22, 24, 34, 36) du module d'équilibrage (14),

le premier élément de commutation (22), le deuxième élément de commutation (24) et la première bobine (26) formant un premier demi-pont (30) et le troisième élément de commutation (34), le quatrième élément de commutation (36) et la deuxième bobine (28) formant un deuxième demi-pont (32) pour le module d'équilibrage (14).

13. Procédé selon la revendication 12, dans lequel le courant d'équilibrage I_bal est réparti sur la première bobine (26), une deuxième bobine (28) et/ou d'autres bobines lorsque le module d'équilibrage (14) comprend un premier demi-pont (30), un deuxième demi-pont (32) et/ou d'autres demi-ponts (32), les demi-ponts (30, 32) étant connectés à la prise centrale (20) du module d'équilibrage (14) par l'intermédiaire des bobines (26, 28).

14. Procédé selon la revendication 12 ou 13, dans lequel le premier demi-pont (30) et le deuxième demi-pont (32) sont commandés de manière décalée l'un par rapport à l'autre.

Fig. 1

**Fig. 2**

Fig. 3

Fig. 4

Fig. 5

a)

b)

**IN DER BESCHREIBUNG AUFGEFÜHRTE DOKUMENTE**

**In der Beschreibung aufgeführte Patentdokumente**

- US 5631534 A
- DE 102016206919 A1